# FASCICULE DE BREVET EUROPEEN

(11) **EP 4 402 769 B1**
(45) Date de publication et mention de la délivrance du brevet: **25.11.2026**
(21) Numéro de dépôt: 22789952.3
(22) Date de dépôt: 14.09.2022
(51) Int. Cl.: H02J 13/13, H02J 13/00, H04L 61/5038

(54) **PROCEDE DE GESTION DE L'ALIMENTATION ELECTRIQUE D'APPAREILS**
VERFAHREN ZUR VERWALTUNG DER ELEKTRISCHEN VERSORGUNG VON GERÄTEN
METHOD FOR MANAGING THE ELECTRICAL SUPPLY OF APPLIANCES

(30) Priorité: 16.09.2021 FR 2109717
(43) Date de publication de la demande: 24.07.2024
(73) Titulaire: Orange, 92130 Issy-les-Moulineaux (FR)
(72) Inventeur: CUMIN, Julien, 92326 CHÂTILLON CEDEX (FR); PAIRIS, Julien, 92326 CHÂTILLON CEDEX (FR)
(86) Numéro de dépôt international: PCT/FR2022/051733
(87) Numéro de publication internationale: WO 2023/041876

(56) Documents cités:
- EP-A1- 2 102 730
- US-A1- 2015 046 956

## Description

### Domaine technique

Le domaine technique est celui de l'alimentation électrique d'appareils.

Plus précisément, l'invention se rapporte à un procédé de gestion de l'alimentation électrique d'appareils.

Les appareils dont il est question sont d'abord des appareils électro-ménagers, et en particulier des appareils voués à la diffusion audio-visuelle, qui présentent la caractéristique de ne pouvoir être utilisés que de façon disjointe. Par ce terme, nous entendons des appareils qui, à un moment de leur utilisation, forment un groupe dans lequel au maximum un seul appareil pourra fonctionner utilement à un moment donné. L'exemple le plus évident de cette situation est donné par un groupe d'équipements qui émettent un signal audio-visuel pour diffusion par un poste de télévision unique : dans un foyer, il est courant qu'un lecteur de DVD, un lecteur Blu-ray, un décodeur de télévision, une console de jeu ou d'autres appareils encore soient branchés sur un seul poste de télévision. Un seul de ces appareils au maximum peut diffuser utilement son signal audio-visuel vers le poste de télévision qui va l'afficher dans le foyer.

Au-delà des appareils à usage domestique, on peut trouver des appareils qui forment un groupe dont l'utilisation est disjointe dans d'autres contextes. Par exemple, dans l'industrie, on peut se retrouver dans une situation où l'alimentation électrique d'un atelier est limitée, et où dans un groupe d'appareils, un seul peut être utilisé à pleine puissance à un instant donné.

### Etat de la technique

La gestion de l'alimentation électrique des appareils est nécessaire pour optimiser et économiser la consommation électrique desdits appareils. En général, les appareils électriques disposent d'un mode de mise en veille qui permet de diminuer la consommation électrique d'un appareil non utilisé sans le débrancher complètement. La mise en veille d'un appareil permet de le relancer plus rapidement que s'il était totalement débranché, tout en permettant une forte diminution de la consommation électrique. Cette mise en veille se fait en général à la demande d'un utilisateur grâce à une télécommande. Cette mise en veille peut également être déclenchée automatiquement au bout d'un certain délai d'inactivité pour certains appareils.

Cependant, la situation des appareils qui forment un groupe dont l'utilisation est disjointe n'est pas utilisée pour faciliter leur mise en veille automatique, alors que ce fait pourrait être utilisé. Le protocole HDMI (acronyme anglais pour *High-Definition Multimedia Interface*) dispose d'une fonctionnalité dénommée CEC (pour *Consumer Electronics Control*) qui permet à partir de l'appui sur un seul bouton de télécommande de mettre en veille tout un ensemble d'appareils. Mais cette fonctionnalité reste uniquement déclenchée par un appui sur un bouton de télécommande par un utilisateur.

L'état de la technique comprend les documents suivants :
- La demande de brevet US 2015046956 A1 divulgue un système de transmission sans fil, tel qu'une télécommande, qui peut commander l'alimentation électrique de plusieurs appareils.
- La demande de brevet EP 2102730 A1 divulgue un dispositif d'alimentation électrique qui peut déterminer l'usage de puissance en veille des appareils alimentés et couper l'alimentation en fonction de ce niveau.

L'invention vient améliorer la situation.

### L'invention

Selon un premier aspect fonctionnel, l'invention a trait à un procédé de gestion de l'alimentation électrique d'appareils électriques reliés entre eux via une liaison de communication et aptes à prendre plusieurs états d'alimentation électrique, comprenant :
a) une phase de regroupement d'appareils électriques suivant le critère qu'un seul parmi ces appareils puisse être utilisé à la fois à un moment donné ;
b) une phase de détection d'un changement d'état électrique d'un des appareils du groupe obtenu à la suite du regroupement, le nouvel état étant représentatif d'un souhait d'utilisation dudit appareil ; et,
c) une phase de gestion des états d'alimentation électrique des autres appareils dudit groupe, des ordres de changement d'état électrique étant émis pendant la phase de gestion pour assurer qu'un seul parmi les appareils du groupe (GRP) puisse être utilisé.

Dans un mode de réalisation, la phase de gestion consiste en l'émission d'ordres de changement d'état électrique à des appareils électriques parmi ceux du groupe obtenu à la suite du regroupement. Ces ordres peuvent être choisis parmi des ordres de mise en veille de l'appareil ou des ordres de coupure de l'alimentation électrique de l'appareil. Dans tous les modes de réalisation, la phase de gestion est effectuée de façon à respecter le critère qu'un seul des appareils électriques puisse être utilisé à la fois à un moment donné.

Grâce à l'invention, l'utilisateur d'un appareil parmi le groupe n'aura plus à basculer les appareils qu'il n'utilise pas à un moment donné en mode de veille. Cette bascule automatique est réalisée par la gestion des états d'alimentation électrique des appareils non utilisés, à la suite de la signalisation par l'utilisateur qu'il souhaite utiliser un appareil. Ce souhait est signalé par exemple par l'appui sur un bouton de l'appareil en question ou d'une télécommande. La gestion automatique assurera que le critère qu'un seul parmi les appareils du groupe puisse être utilisé à la fois sera respecté. Cette gestion automatique sera précisée dans des modes ultérieurs de réalisation de l'invention mais consistera généralement en l'envoi d'ordres aux autres appareils. On trouve ici un avantage de praticité de l'invention, qui soulage l'utilisateur d'avoir à effectuer l'ensemble des ordres de mise en veille des autres appareils.

De plus, un second avantage de cette bascule est qu'elle permet de réaliser des économies d'énergie. En effet, la mise en veille des appareils non utilisés devient systématique puisqu'elle n'est pas confiée au bon vouloir de l'utilisateur.

Selon encore un premier mode de mise en œuvre particulier de l'invention, l'un des appareils électriques est désigné comme appareil principal destiné à être utilisé par des appareils secondaires, et la phase a) de regroupement s'applique aux appareils secondaires suivant le critère qu'un seul parmi ces appareils secondaires utilise à la fois à un moment donné l'appareil principal.

Grâce à ce premier mode, l'invention est appliquée à son cas d'usage le plus fréquent dans l'environnement domestique, à savoir un ensemble d'appareils électro-ménagers tels un lecteur DVD, ou Blu-ray, ou un décodeur télévision qui utilisent pour la diffusion d'images ou de sons un autre appareil, tel une télévision ou une enceinte haute-fidélité, qui jouent le rôle d'appareil principal.

Selon un deuxième mode de mise en œuvre particulier de l'invention, qui pourra être mis en œuvre cumulativement avec le précédent mode, les phases a) à c) de regroupement d'appareils, de détection de changement d'état, et de gestion des états d'alimentation électrique, sont effectuées par l'appareil principal.

Dans ce deuxième mode de réalisation, c'est l'appareil principal qui implémente le procédé de gestion, en assurant les phases de regroupement, détection, et gestion. L'avantage de cette architecture est de se rapprocher de la structure souvent observée dans l'environnement domestique, à savoir un appareil principal utilisé de façon exclusive par des appareils secondaires. Cette architecture centralisée a l'avantage de s'appuyer sur les ressources de calcul de l'appareil principal, qui sont plus conséquentes *a priori* que celles des autres appareils.

Selon un troisième mode de mise en œuvre particulier de l'invention, qui pourra être mis en œuvre alternativement avec le mode précédent, les phases a) à c) de regroupement d'appareils, de détection de changement d'état, et de gestion des états d'alimentation électrique, sont effectuées par tout ou partie des appareils.

Grâce à ce mode de mise en œuvre particulier de l'invention, l'invention est implémentée dans une architecture décentralisée. L'avantage de cette architecture est de ne pas faire de présupposés sur les différentes fonctionnalités des appareils et d'utiliser l'ensemble des capacités de calcul des appareils électriques.

Selon un quatrième mode de mise en œuvre particulier de l'invention, qui pourra être mis en œuvre cumulativement avec les autres modes, la phase c) de gestion comprend un envoi systématique d'ordres de changement d'état électrique à tous les autres appareils du groupe.

Dans ce mode de mise en œuvre particulier, la phase de gestion consiste en l'émission systématique d'ordres de changement d'état électrique vers les autres appareils du groupe. Si l'ordre de changement d'état électrique émis vers un ou plusieurs appareils du groupe n'était pas nécessaire car ces appareils étaient déjà dans l'état visé, c'est-à-dire mis en veille ou non alimentés électriquement, ce mode de mise en œuvre est sans conséquence car l'ordre sera tout simplement ignoré. L'avantage de ce mode est de simplifier la phase de gestion du procédé en la rendant systématique par l'envoi d'ordres à tous les autres appareils du groupe. Ce mode permet donc d'éviter de devoir connaître l'information sur le statut électrique des appareils pour réaliser la phase de gestion et émettre les ordres de changement d'état électrique.

Selon un cinquième mode de mise en œuvre particulier de l'invention, qui pourra être mis en œuvre cumulativement avec les modes précédents, la phase c) de gestion comprend un envoi d'ordres de changement d'état électrique à un sous-ensemble desdits autres appareils du groupe de façon à respecter le critère qu'un seul parmi les appareils du groupe puisse être utilisé à la fois à un moment donné, les appareils dudit sous-ensemble étant choisi en fonction de leurs états électriques respectifs.

Dans ce mode de mise en œuvre particulier, la phase de gestion consiste en l'émission d'ordres de changement d'état électrique, ladite émission étant limitée aux ordres nécessaires pour s'assurer que soit respecté le critère qu'un seul parmi les appareils du groupe puisse être utilisé à la fois à un moment donné. Plus précisément, un ordre de changement d'état électrique ne serait pas émis dans ce mode vers un appareil en veille ou éteint puisque son état ne va pas empêcher le respect du critère. L'avantage de ce mode de mise en œuvre est de limiter l'envoi d'ordres de changement d'état électrique au strict nécessaire.

Selon un sixième mode de mise en œuvre particulier de l'invention, qui pourra être mis en œuvre cumulativement avec les modes précédents, un ordre de changement d'état électrique parmi les plusieurs est un ordre de mise en veille.

La mise en veille d'un appareil électrique permet de diminuer fortement sa consommation électrique, tout en conservant certaines fonctionnalités activées. Ces fonctionnalités activées permettent d'assurer un redémarrage plus facile de l'appareil. L'avantage de ce mode de mise en œuvre est donc d'assurer une plus grande praticité de l'invention, en assurant des réveils plus rapides des appareils électriques après leur mise en veille.

Selon un septième mode de mise en œuvre particulier de l'invention, qui pourra être mis en œuvre alternativement au mode précédent, un ordre de changement d'état électrique parmi les plusieurs est un ordre de coupure de l'alimentation électrique.

Grâce à ce mode de mise en œuvre, il est possible d'appliquer l'invention à des appareils électriques qui ne disposent pas de mécanisme de mise en veille pilotable. La coupure de l'alimentation électrique pourra alors être déclenchée par exemple par une prise électrique connectée qui alimente l'appareil visé par l'ordre de coupure, ou par tout autre moyen.

Selon un premier aspect matériel, l'invention a trait à une entité de gestion apte à réaliser un procédé de gestion de l'alimentation électrique d'appareils électriques reliés entre eux via une liaison de communication et aptes à prendre plusieurs états d'alimentation électrique, entité caractérisée en ce qu'elle comprend :
a) un module de regroupement apte à réaliser le regroupement d'appareils électriques suivant le critère qu'un seul parmi ces appareils puisse être utilisé à la fois à un moment donné ;
b) un module de détection apte à réaliser la détection d'un changement d'état électrique d'un des appareils du groupe obtenu à la suite du regroupement, le nouvel état étant représentatif d'un souhait d'utilisation dudit appareil ; et,
c) un module de gestion apte à réaliser la gestion des états d'alimentation électrique des autres appareils dudit groupe, des ordres de changement d'état électrique étant émis pendant la phase de gestion pour assurer qu'un seul parmi les appareils du groupe (GRP) puisse être utilisé.

Selon un deuxième aspect matériel, l'invention a trait à un appareil électrique comprenant un module de gestion apte à réaliser le procédé de gestion défini ci-dessus.

Selon un autre aspect matériel, l'invention a trait à un programme d'ordinateur apte à être mis en œuvre par un appareil électrique, le programme comprenant des instructions de code qui, lorsqu'il est exécuté par un processeur, réalise les étapes du procédé de gestion défini ci-dessus.

Enfin, selon un autre aspect matériel, l'invention a trait à un support de données sur lequel est enregistré un programme d'ordinateur comprenant des séquences d'instructions pour la mise en œuvre du procédé de gestion défini ci-dessus.

Le support de données peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique tel qu'un disque dur. D'autre part, le support peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question. Le programme selon l'invention peut utiliser tout type de technologie informatique en terme de langages de programmation compilés, interprétés, ou une combinaison des deux ainsi qu'en terme de systèmes d'exploitation.

L'invention sera mieux comprise à la lecture de la description qui suit, donnée à titre d'exemple, et faite en référence aux dessins annexés sur lesquels :
[Fig. 1] représente un groupe de trois appareils électriques et un quatrième appareil électrique et l'évolution de leur état d'alimentation électrique suivant le procédé de gestion.
[Fig. 2] illustre un appareil principal et un groupe de trois appareils secondaires et l'évolution de leur état d'alimentation électrique suivant le procédé de gestion.

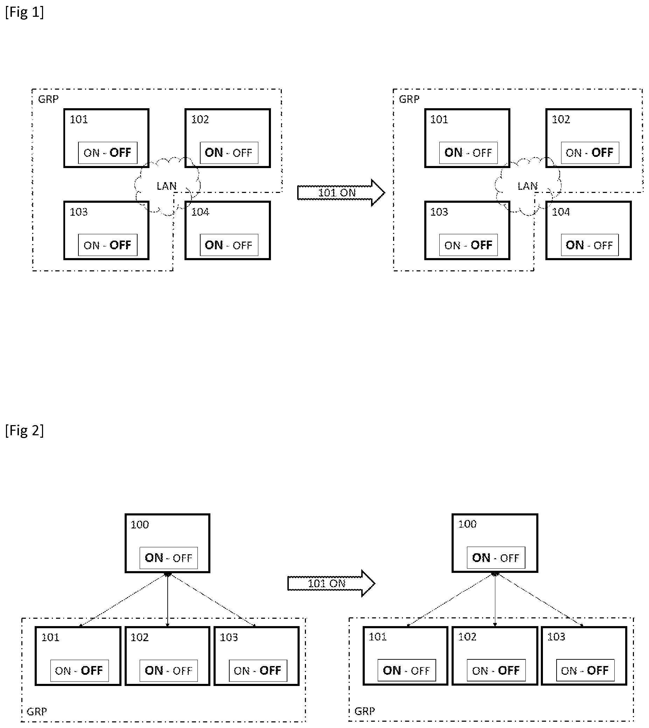

La figure 1 représente quatre appareils électriques 101, 102, 103 et 104.

Un appareil a l'architecture matérielle d'un ordinateur conventionnel. Il comporte notamment un processeur, une mémoire vive et une mémoire morte telle qu'une mémoire Flash, et un module de communication pour communiquer avec d'autres appareils. Les appareils électriques 101, 102, 103 et 104 sont reliés entre eux par une liaison de communication. Dans la figure 1, cette liaison est un réseau local LAN auquel les quatre appareils appartiennent, mais tout autre type de liaison est possible, par exemple une liaison par une technologie radio-fréquence telle que le Bluetooth, le protocole RF4CE (acronyme anglais pour *Radio Frequency For Consumer Electronics*) ou l'UWB (acronyme anglais pour *Ultra Wide Band*)*.* Dans une variante, la liaison de communication peut aussi être réalisée par la connexion des appareils 101, 102, 103 et 104 au réseau Internet.

L'état électrique des appareils 101, 102, 103 et 104 est représenté de façon schématisée avec un rectangle comprenant les mentions ON et OFF. L'état électrique de l'appareil considéré est représenté dans la figure 1 par la mise en gras du mot ON ou du mot OFF. Quand le mot ON est en gras, l'appareil concerné est alimenté électriquement. Quand le mot OFF est en gras, l'appareil concerné est alimenté de façon minimale. L'appareil en question peut être alors dans un état de veille, ou bien même, son alimentation électrique peut être complètement coupée. Dans la partie de gauche de la figure 1, les appareils 102 et 104 sont alimentés électriquement (ON en gras) alors que les appareils 101 et 103 ne sont pas alimentés électriquement ou sont en veille (OFF en gras).

Le procédé comprend trois phases a) à c) qui sont décrites en détail ci-dessous. Une première phase a) de regroupement consiste à regrouper des appareils électriques parmi les appareils électriques 101 à 104 suivant le critère qu'un seul parmi les appareils regroupés puisse être utilisé à la fois à un moment donné. Une deuxième phase b) de détection consiste à détecter le changement d'état électrique d'un des appareils du groupe obtenu à la suite du regroupement, le nouvel état étant représentatif d'un souhait d'utilisation dudit appareil. Une troisième phase de gestion c) va assurer que le critère suivant lequel un seul appareil puisse être utilisé parmi les appareils regroupés dans la phase a) de regroupement sera bien respecté même après le changement d'état électrique détecté en phase b).

Dans la partie de gauche de la figure 1, le résultat de la phase a) de regroupement d'appareils électriques suivant le critère qu'un seul parmi ces appareils puisse être utilisé à la fois à un moment donné est représenté par une forme en pointillés isolant les appareils 101, 102 et 103, qui sont donc regroupés dans un groupe GRP. L'appareil 104 ne fait pas partie du groupe GRP, et il est en effet alimenté électriquement (ON en gras) et peut donc être utilisé alors que c'est également le cas de l'appareil 102. Dans le groupe des appareils 101, 102 et 103, un seul appareil peut être utilisé à la fois à un moment donné. Pour le moment décrit par la partie de gauche de la figure 1, seul l'appareil 102 est alimenté électriquement.

La phase a) de regroupement des appareils 101, 102 et 103 peut être effectuée de plusieurs manières. Il est possible que le regroupement soit défini par défaut, au lancement initial des appareils, de par la nature des appareils concernés et leur relation. La phase a) de regroupement peut également se faire à l'initiative d'un appareil parmi les appareils 101, 102, 103 et 104. La phase a) de regroupement peut également se faire par diffusion par les appareils concernés de messages informatifs quant à leurs fonctionnalités et par un protocole similaire aux protocoles d'élection répartis. Une dernière possibilité est que soit présent un dispositif (non représenté sur la figure 1) tel qu'un ordiphone ou une tablette tactile, relié à l'ensemble des appareils 101, 102, 103 et 104, par exemple par le réseau local LAN ; dans cette configuration, ce dispositif permet à un utilisateur de procéder à la phase a) de regroupement dans le groupe GRP des appareils 101, 102 et 103 suivant le critère qu'un seul parmi ces appareils 101, 102 et 103 puisse être utilisé à la fois à un moment donné. Dans cette variante, c'est l'utilisateur qui pilote la phase a) de regroupement et qui pourra changer suivant ses besoins les appareils membres du groupe GRP.

Précisons que la phase a) de regroupement peut être exécutée à plusieurs reprises. Après l'exécution initiale de la phase a) de regroupement, celle-ci peut être répétée par exemple pour intégrer de nouveaux appareils dans le groupe GRP ou au contraire pour en retirer. Des exécutions supplémentaires de la phase a) de regroupement peuvent par exemple être déclenchées quand de nouveaux appareils électriques sont détectés dans le voisinage du réseau local LAN ou bien à la demande d'un utilisateur.

La phase b) de détection du changement d'état électrique de l'appareil 101 du groupe GRP est représentée dans la figure 1 par une flèche située au milieu de la figure, étiquetée par l'inscription « 101 ON ». Cette phase b) correspond par exemple à la détection d'une action d'un utilisateur qui souhaite utiliser l'appareil 101 et qui va appuyer sur un interrupteur mécanique de l'appareil 101, ou bien sur un bouton d'une télécommande reliée à l'appareil 101, ou bien prononcer une commande vocale qui sera interprétée comme une demande d'activation de l'appareil 101, ou toute autre variante de changement d'état électrique de l'appareil 101 représentatif d'un souhait d'utilisation dudit appareil 101. Un autre exemple peut être la détection d'une action d'un système extérieur à l'invention, par exemple dans un contexte industriel, un système qui contrôle l'allumage des appareils en suivant une planification décidée *a priori.* La phase b) de détection peut être effectuée par tout appareil parmi les appareils électriques 101, 102, 103 et 104 reliés entre eux par la liaison de communication LAN.

À la suite de la phase b) de détection du changement d'état électrique de l'appareil 101, le procédé se poursuit par la phase c) de gestion des états d'alimentation électrique des autres appareils 102 et 103 du groupe GRP. La phase c) de gestion doit assurer que soit respecté le critère selon lequel un seul parmi les appareils du groupe GRP puisse être utilisé à la fois à un moment donné. Comme il est possible que les autres appareils 102 et 103 du groupe GRP soient déjà dans un état de très basse consommation électrique, par exemple dans un état de veille ou de coupure de l'alimentation électrique, la phase de gestion peut ne pas comprendre d'action spécifique, si le critère reste respecté même après le changement d'état électrique de l'appareil 101. En l'occurrence, dans la situation représentée dans la partie gauche de la figure 1, l'appareil 102 du groupe GRP est dans un état d'alimentation électrique ON. Pour assurer à la suite de la phase de détection du changement d'état électrique de l'appareil 101 que le critère qu'un seul parmi les appareils 101, 102, 103 du groupe GRP puisse être utilisé à la fois à un moment donné, il faudra donc que la phase c) de gestion garantisse le respect du critère et que soit émis un ordre de changement d'état électrique pour l'appareil 102.

La partie droite de la figure 1 montre la situation d'alimentation électrique des appareils 101, 102, 103 et 104 après la phase c) de gestion des états d'alimentation électrique des autres appareils 102 et 103 du groupe GRP. Comme un seul parmi les appareils électriques 101, 102 et 103 du groupe GRP peut être utilisé à la fois à un moment donné, il a fallu gérer au moins l'état d'alimentation électrique de l'appareil 102 et par exemple adresser au moins un ordre de changement d'état électrique à l'appareil 102. Celui-ci qui était dans l'état d'alimentation électrique ON en partie gauche de la figure 1 est dans l'état OFF en partie droite. Le critère selon lequel un seul parmi les appareils électriques 101, 102 et 103 du groupe GRP peut être utilisé à la fois à un moment donné est bien respecté. En ce qui concerne l'appareil 104, comme il est en dehors du groupe GRP, son état d'alimentation électrique ON ne change pas entre la partie gauche et la partie droite de la figure 1. Pour l'appareil 103 du groupe GRP, son état d'alimentation électrique était à OFF en partie gauche de la figure 1 et reste à OFF en partie droite. Il n'y a peutêtre pas eu d'ordre émis de changement d'état électrique pour l'appareil 103 dans le cas où la phase c) de gestion des états d'alimentation électrique comprend un envoi d'ordres à un sous-ensemble des appareils. Ou bien, si la phase c) de gestion comprend un envoi systématique d'ordres de changement d'état électrique, l'ordre envoyé pour l'appareil 103 n'a pas changé son état d'alimentation électrique.

On peut noter qu'il n'est pas fait mention dans la figure 1 de la ou les entités qui réalisent le procédé. Toutes les capacités de calcul des appareils 101, 102, 103 et 104 peuvent être utilisées pour effectuer les phases a) à c) de regroupement, détection et gestion. Des dispositifs externes peuvent également être utilisés, par exemple pour permettre à un utilisateur de procéder à la phase a) de regroupement. Les appareils 101, 102 et 103 du groupe GRP doivent simplement pouvoir exécuter des ordres de changement d'état électrique. Ceci peut être garanti en dernière option en branchant les appareils 101, 102 et 103 du groupe GRP sur des prises électriques connectées qui peuvent recevoir des messages de coupure de l'alimentation électrique.

Précisons également que la notion d'appareils peut être élargie pour prendre en compte des combinaisons d'appareils. Un appareil au sens de l'invention peut être dans certains exemples un appareil abstrait composé de plusieurs petits appareils qui concourent à remplir la fonctionnalité de l'appareil abstrait. Par exemple, un ordinateur personnel peut être vu, dans certaines configurations, comme un appareil abstrait composé d'autres appareils tels qu'un écran, un clavier et une station de travail ou ordinateur tour ou d'autres composants. Les appareils composant l'appareil abstrait peuvent disposer de leur propre alimentation électrique ou bien partager une seule source d'alimentation électrique ou bien utiliser toute combinaison. Le procédé peut s'appliquer à des appareils abstraits composés de plusieurs appareils. Dans ce cas, la phase a) de regroupement peut concerner des appareils abstraits composés d'autres appareils plus petits. La phase c) de gestion s'assurera que le critère de regroupement reste bien respecté, en prenant en compte l'utilisation d'éventuels appareils abstraits. Si un ordre de changement d'état électrique est envoyé à un appareil abstrait durant la phase c) de gestion, il s'appliquera aux appareils composant cet appareil abstrait.

La figure 2 présente une application similaire du procédé de gestion que celle décrite dans la figure 1 mais pour une architecture différente.

La figure 2 présente quatre appareils électriques 100, 101, 102 et 103. L'état d'alimentation électrique des appareils 100, 101 ,102 et 103 est représenté de la même manière que dans la figure 1 avec un rectangle comprenant les mentions ON et OFF. L'état électrique de l'appareil considéré est représenté dans la figure 2 par la mise en gras du mot ON ou du mot OFF. Quand le mot ON est en gras, l'appareil concerné est alimenté électriquement. Quand le mot OFF est en gras, l'appareil concerné est alimenté de façon minimale.

Dans la figure 2, l'appareil 100 est désigné comme appareil principal destiné à être utilisé de façon exclusive par l'un parmi les appareils secondaires 101, 102 et 103. Ces trois appareils 101, 102 et 103 sont regroupés suite à la phase a) de regroupement dans le groupe GRP. En effet, ces appareils secondaires 101, 102 et 103 doivent accéder de façon exclusive à l'appareil principal 100 pour remplir leur fonctionnalité. Autrement dit, les appareils secondaires 101, 102 et 103 vérifient le critère qu'un seul parmi les appareils secondaires 101, 102 et 103 puisse utiliser à la fois à un moment donné l'appareil principal 100. Il est donc correct de les regrouper dans le groupe GRP car un seul des appareils 101, 102 et 103 pourra être utilisé à la fois à un moment donné.

L'appareil principal 100 sera typiquement une télévision ou bien une chaîne haute-fidélité et les appareils secondaires 101, 102 et 103 seront typiquement des appareils qui utilisent l'appareil 100 comme sortie de signal audio-visuelle, par exemple des consoles de jeu vidéo ou bien des lecteurs DVD ou Blu-ray, ou bien des décodeurs TV, ou bien des ordinateurs, ou tout autre appareil.

Dans la figure 2, les appareils électriques 100, 101, 102 et 103 sont reliés par une liaison de communication qui s'effectue à travers l'appareil principal 100. Les appareils secondaires 101, 102 et 103 disposent d'une liaison avec l'appareil 100 qui peut être rendue par exemple par une technologie radio-fréquence telle que le Bluetooth, le protocole RF4CE (acronyme anglais pour *Radio Frequency For Consumer Electronics*) ou l'UWB (acronyme anglais pour *Ultra Wide Band*), ou bien par une liaison filaire, ou bien par une liaison utilisant les courants porteurs électriques. Ces liaisons sont représentées dans la figure 2 par des flèches entre l'appareil principal 100 et les appareils secondaires 101, 102 et 103. Ce sont par exemple les liaisons de communication permettant aux appareils secondaires 101, 102 et 103 d'adresser un signal audio-visuel à l'appareil principal 100.

La partie de gauche de la figure 2 montre la situation en ce qui concerne l'état électrique des appareils 100, 101, 102 et 103, et la partie de droite montre la situation de l'état électrique des mêmes appareils 100, 101, 102 et 103 après la phase b) de détection d'un changement d'état électrique de l'appareil 101, représenté par la flèche étiquetée « 101 ON », et après la phase c) de gestion des états d'alimentation électrique. Comme pour la figure 1, la conséquence de la détection du changement de l'état électrique de l'appareil 101 est le changement d'état de l'appareil 102 dont l'état passe de ON à OFF. En effet, dans le groupe GRP d'appareils secondaires 101, 102 et 103, un seul appareil peut être utilisé à la fois à un moment donné, donc le souhait d'utilisation de l'appareil 101 implique le passage en non-alimentation électrique de l'appareil 102. L'état électrique de l'appareil secondaire 102 dans la partie droite de la figure 2 est donc bien OFF. Comme pour la situation décrite dans la figure 1, l'appareil secondaire 103 n'a pas eu à changer d'état électrique OFF. Comme précédemment, dans une variante du procédé, aucun ordre n'a été émis vers l'appareil secondaire 103 car ce n'était pas nécessaire à l'exécution du procédé. Ou bien, dans une autre variante du procédé, un ordre a bien été émis vers l'appareil secondaire 103 mais n'a pas eu d'effet car l'appareil secondaire 103 se trouvait déjà dans l'état d'alimentation électrique visé.

L'architecture décrite dans la figure 2 suggère une implémentation possible du procédé de gestion dans laquelle c'est l'appareil principal 100 qui effectue les phases a) à c) de regroupement d'appareils, de détection de changement d'état et de gestion des états d'alimentation électrique. Dans une variante, les phases a) à c) de regroupement d'appareils, de détection de changement d'état et de gestion des états d'alimentation électrique sont effectuées par tout ou partie des appareils 100, 101, 102 ou 103.

Signalons enfin que les différents calculs dont il est question dans ce texte sont réalisés par des modules qui sont des composants logiciels ou des composants matériels, ou des combinaisons de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions. De la même manière, un composant matériel correspond à tout élément d'un ensemble matériel (ou *hardware)* apte à mettre en œuvre une fonction ou un ensemble de fonctions pour le module concerné (circuit intégré, carte à puce, carte à mémoire, etc.). Ces composants logiciels peuvent utiliser tout type de technologie informatique en terme de langages de programmation compilés, interprétés, ou une combinaison des deux ainsi qu'en terme de systèmes d'exploitation.

## Revendications

1. Procédé de gestion de l'alimentation électrique d'appareils électriques (100, 101, 102, 103, 104) reliés entre eux via une liaison de communication et aptes à prendre plusieurs états d'alimentation électrique, comprenant :
a) une phase de regroupement d'appareils électriques (101, 102, 103) suivant le critère qu'un seul parmi ces appareils puisse être utilisé à la fois à un moment donné ;
b) une phase de détection d'un changement d'état électrique d'un des appareils du groupe (GRP) obtenu à la suite du regroupement, le nouvel état étant représentatif d'un souhait d'utilisation dudit appareil ; et,
c) une phase de gestion des états d'alimentation électrique des autres appareils dudit groupe (GRP), des ordres de changement d'état électrique étant émis pendant la phase de gestion pour assurer qu'un seul parmi les appareils du groupe (GRP) puisse être utilisé.

2. Procédé de gestion selon la revendication 1, **caractérisé en ce que** l'un des appareils électriques est désigné comme appareil principal (100) destiné à être utilisé par des appareils secondaires (101, 102, 103), et **en ce que** la phase a) de regroupement s'applique aux appareils secondaires (101, 102, 103) suivant le critère qu'un seul parmi ces appareils secondaires (101, 102, 103) utilise à la fois à un moment donné l'appareil principal (100).

3. Procédé de gestion selon les revendications 1 et 2, **caractérisé en ce que** les phases a) à c) sont effectuées par l'appareil principal (100).

4. Procédé de gestion selon la revendication 1, **caractérisé en ce que** les phases a) à c) sont effectuées par tout ou partie des appareils (100, 101, 102, 103, 104).

5. Procédé de gestion selon la revendication 1, **caractérisé en ce que** la phase c) de gestion comprend un envoi systématique d'ordres de changement d'état électrique à tous les autres appareils du groupe (GRP).

6. Procédé de gestion selon la revendication 1, **caractérisé en ce que** la phase c) de gestion comprend un envoi d'ordres de changement d'état électrique à un sous-ensemble desdits autres appareils du groupe (GRP) de façon à respecter le critère qu'un seul parmi les appareils du groupe (GRP) puisse être utilisé à la fois à un moment donné, les appareils dudit sous-ensemble étant choisi en fonction de leurs états électriques respectifs.

7. Procédé de gestion suivant l'une des revendications 1 à 6, **caractérisé en ce qu'**un ordre de changement d'état électrique parmi les plusieurs est un ordre de mise en veille.

8. Procédé de gestion suivant l'une des revendications 1 à 6, **caractérisé en ce qu'**un ordre de changement d'état électrique parmi les plusieurs est un ordre de coupure de l'alimentation électrique.

9. Entité de gestion apte à réaliser un procédé de gestion de l'alimentation électrique d'appareils électriques (100, 101, 102, 103, 104) reliés entre eux via une liaison de communication et aptes à prendre plusieurs états d'alimentation électrique, ladite entité étant **caractérisée en ce qu'**elle comprend :
a) un module de regroupement apte à réaliser le regroupement d'appareils électriques (101, 102, 103) suivant le critère qu'un seul parmi ces appareils puisse être utilisé à la fois à un moment donné ;
b) un module de détection apte à réaliser la détection d'un changement d'état électrique d'un des appareils du groupe (GRP) obtenu à la suite du regroupement, le nouvel état étant représentatif d'un souhait d'utilisation dudit appareil ; et,
c) un module de gestion apte à réaliser la gestion des états d'alimentation électrique des autres appareils dudit groupe (GRP), des ordres de changement d'état électrique étant émis par le module de gestion pour assurer qu'un seul parmi les appareils du groupe (GRP) puisse être utilisé.

10. Appareil électrique comprenant un module de gestion selon la revendication 9.

11. Programme d'ordinateur apte à être mis en œuvre par un appareil électrique selon la revendication 10, le programme comprenant des instructions de code qui, lorsqu'il est exécuté par un processeur, réalise les étapes du procédé de gestion selon la revendication 1.

12. Support de données sur lequel est enregistré un programme d'ordinateur selon la revendication 11 comprenant des séquences d'instructions pour la mise en œuvre du procédé de gestion selon la revendication 1.

## Patentansprüche

1. Verfahren zum Verwalten der elektrischen Versorgung von elektrischen Geräten (100, 101, 102, 103, 104), die über eine Kommunikationsverbindung untereinander verbunden sind und in der Lage sind, mehrere Zustände der elektrischen Versorgung anzunehmen, umfassend:
a) eine Phase des Gruppierens von elektrischen Geräten (101, 102, 103) nach dem Kriterium, dass zu einem gegebenen Zeitpunkt nur eines dieser Geräte zurzeit verwendet werden kann;
b) eine Phase des Detektierens einer Änderung des elektrischen Zustands eines der Geräte der Gruppe (GRP), die nach der Gruppierung erhalten wurde, wobei der neue Zustand für einen Wunsch der Verwendung des Geräts repräsentativ ist; und,
c) eine Phase des Verwaltens der Zustände der elektrischen Versorgung der anderen Geräte der Gruppe (GRP), wobei während der Phase des Verwaltens Befehle zur Änderung des elektrischen Zustands ausgegeben werden, um sicherzustellen, dass nur eines der Geräte der Gruppe (GRP) verwendet werden kann.

2. Verwaltungsverfahren nach Anspruch 1, **dadurch gekennzeichnet, dass** eines der elektrischen Geräte als Hauptgerät (100) bezeichnet wird, das dazu bestimmt ist, von den Nebengeräten (101, 102, 103) verwendet zu werden, dass die Phase a) des Gruppierens a) für die Nebengeräte (101, 102, 103) nach dem Kriterium gilt, dass zu einem gegebenen Zeitpunkt nur eines der Nebengeräte (101, 102, 103) zurzeit das Hauptgerät (100) verwendet.

3. Verwaltungsverfahren nach den Ansprüchen 1 und 2, **dadurch gekennzeichnet, dass** die Phasen a) bis c) von dem Hauptgerät (100) durchgeführt werden.

4. Verwaltungsverfahren nach Anspruch 1, **dadurch gekennzeichnet, dass** die Phasen a) bis c) von allen oder einigen der Geräte (100, 101, 102, 103, 104) durchgeführt werden.

5. Verwaltungsverfahren nach Anspruch 1, **dadurch gekennzeichnet, dass** die Phase c) des Verwaltens ein systematisches Senden von Befehlen zur Änderung des elektrischen Zustands an alle anderen Geräte der Gruppe (GRP) umfasst.

6. Verwaltungsverfahren nach Anspruch 1, **dadurch gekennzeichnet, dass** die Phase c) des Verwaltens das Senden von Befehlen zur Änderung des elektrischen Zustands an eine Teilmenge der anderen Geräte der Gruppe (GRP) umfasst, so dass das Kriterium erfüllt wird, dass zu einem gegebenen Zeitpunkt nur eines der Geräte der Gruppe (GRP) zurzeit verwendet werden kann, wobei die Geräte der Teilmenge in Abhängigkeit von ihren jeweiligen elektrischen Zuständen ausgewählt werden.

7. Verwaltungsverfahren nach einem der Ansprüche 1 bis 6, **dadurch gekennzeichnet, dass** ein Befehl zur Änderung des elektrischen Zustands unter den mehreren ein Standby-Befehl ist.

8. Verwaltungsverfahren nach einem der Ansprüche 1 bis 6, **dadurch gekennzeichnet, dass** ein Befehl zur Änderung des elektrischen Zustands unter den mehreren ein Befehl zum Abschalten der elektrischen Versorgung ist.

9. Verwaltungsentität, die in der Lage ist, ein Verfahren zum Verwalten der elektrischen Versorgung von elektrischen Geräten (100, 101, 102, 103, 104) durchzuführen, die über eine Kommunikationsverbindung untereinander verbunden sind und in der Lage sind, mehrere Zustände der elektrischen Versorgung anzunehmen, wobei die Entität **dadurch gekennzeichnet ist, dass** sie Folgendes umfasst:
a) ein Gruppierungsmodul, das in der Lage ist, das Gruppieren von elektrischen Geräten (101, 102, 103) nach dem Kriterium durchzuführen, dass zu einem gegebenen Zeitpunkt nur eines dieser Geräte zurzeit verwendet werden kann;
b) ein Detektionsmodul, das in der Lage ist, das Detektieren einer Änderung des elektrischen Zustands eines der Geräte der Gruppe (GRP), die nach der Gruppierung erhalten wurde, durchzuführen, wobei der neue Zustand für einen Wunsch der Verwendung des Geräts repräsentativ ist; und,
c) ein Verwaltungsmodul, das in der Lage ist, das Verwalten der Zustände der elektrischen Versorgung der anderen Geräte der Gruppe (GRP) durchzuführen, wobei von dem Verwaltungsmodul Befehle zur Änderung des elektrischen Zustands ausgegeben werden, um sicherzustellen, dass nur eines der Geräte der Gruppe (GRP) verwendet werden kann.

10. Elektrisches Gerät, das ein Verwaltungsmodul nach Anspruch 9 umfasst.

11. Computerprogramm, das in der Lage ist, von einem elektrischen Gerät nach Anspruch 10 implementiert zu werden, wobei das Programm Codeanweisungen umfasst, die bei seiner Ausführung durch einen Prozessor die Schritte des Verwaltungsverfahrens nach Anspruch 1 durchführen.

12. Datenträger, auf dem ein Computerprogramm nach Anspruch 11 gespeichert ist, das Anweisungssequenzen zur Implementierung des Verwaltungsverfahrens nach Anspruch 1 umfasst.

## Claims

1. Method for managing the electric power supply to electrical devices (100, 101, 102, 103, 104) which are connected to one another via a communication link and capable of taking several electric power supply states, comprising:
a) a phase of grouping electrical devices (101, 102, 103) according to the criterion that only one of these devices can be used at once at a given moment;
b) a phase of detecting a change in the electrical state of one of the devices in the group (GRP) which is obtained following the grouping, the new state being representative of a desire to use said device; and
c) a phase of managing the electric power supply states of the other devices in said group (GRP), orders to change electrical state being sent during the management phase in order to ensure that only one of the devices in the group (GRP) can be used.

2. Management method according to Claim 1, **characterized in that** one of the electrical devices is designated as the main device (100) intended to be used by secondary devices (101, 102, 103), and **in that** the grouping phase a) applies to the secondary devices (101, 102, 103) according to the criterion that only one of these secondary devices (101, 102, 103) uses the main device (100) at once at a given moment.

3. Management method according to Claims 1 and 2, **characterized in that** phases a) to c) are carried out by the main device (100).

4. Management method according to Claim 1, **characterized in that** phases a) to c) are carried out by all or some of the devices (100, 101, 102, 103, 104).

5. Management method according to Claim 1, **characterized in that** the management phase c) comprises systematically sending orders to change electrical state to all the other devices in the group (GRP).

6. Management method according to Claim 1, **characterized in that** the management phase c) comprises sending orders to change electrical state to a subset of said other devices in the group (GRP) so as to respect the criterion that only one of the devices in the group (GRP) can be used at once at a given moment, the devices in said subset being chosen according to their respective electrical states.

7. Management method according to one of Claims 1 to 6, **characterized in that** one of the several orders to change electrical state is a standby order.

8. Management method according to one of Claims 1 to 6, **characterized in that** one of the several orders to change electrical state is an order to cut off the electric power supply.

9. Management entity capable of performing a method for managing the electric power supply to electrical devices (100, 101, 102, 103, 104) which are connected to one another via a communication link and capable of taking several electric power supply states, said entity being **characterized in that** it comprises:
a) a grouping module capable of grouping electrical devices (101, 102, 103) according to the criterion that only one of these devices can be used at once at a given moment;
b) a detection module capable of detecting a change in the electrical state of one of the devices in the group (GRP) which is obtained following the grouping, the new state being representative of a desire to use said device; and
c) a management module capable of managing the electric power supply states of the other devices in said group (GRP), orders to change electrical state being sent by the management module in order to ensure that only one of the devices in the group (GRP) can be used.

10. Electrical device comprising a management module according to Claim 9.

11. Computer program capable of being implemented on an electrical device according to Claim 10, the program comprising code instructions which, when it is executed by a processor, performs the steps of the management method according to Claim 1.

12. Data medium on which a computer program according to Claim 11, comprising sequences of instructions for implementing the management method according to Claim 1, is stored.
